# EUROPEAN PATENT SPECIFICATION

(11) **EP 1 666 307 B1**
(45) Date of publication and mention of the grant of the patent: **15.08.2007**
(21) Application number: 04026032.5
(22) Date of filing: 03.11.2004
(51) Int. Cl.: B60R 11/02

(54) **LCD car monitor frame structure**
Rahmenstruktur für LCD Monitor eines Personkraftwagens
Structure de cadre d'un écran LCD pour voiture

(43) Date of publication of application: 07.06.2006
(73) Proprietor: Equus Inc., Hsi-Chihh City Taipei Hsien (TW)
(72) Inventor: Chen, Duke, Hsi-Chih City Taipei Hsien (TW)
(74) Representative: TER MEER - STEINMEISTER & PARTNER GbR

(56) References cited:
- EP-A- 1 182 084
- FR-A- 2 801 854
- FR-A- 2 812 603
- US-A1- 2003 076 291

## Description

The present invention relates to a liquid crystal display (LCD) car monitor frame structure as stated in the precharacterizing portion of claim 1.

A liquid crystal display (LCD) car monitor frame structure of this kind is already, known from FR-A 2 812 603. It comprises a roof mount that is fixed to a car ceiling, at least one connecting mechanism with one end pivotally connected to the roof mount, and LCD monitor secured to the other end of the connecting mechanism, wherein a space is provided between the roof mount and the LCD monitor when the LCD monitor is rotated out to a pre-determined position for utilization by passengers.

The lowering of the LCD monitor with this prior art frame structure can only be effected by the angle of rotation of an arm, to the free end of which the LCD monitor is connected. Therefore, lowering of the LCD monitor to a maximum distance from the car ceiling requires a comparatively long arm which, on the other hand, leads to a large frame structure.

It is therefore an object of the present invention to provide a liquid crystal display (LCD) car monitor frame structure which allows a compact design even if the LCD monitor can be lowered from the car ceiling over a very large distance.

The solution of this object can be taken from the pre-characterizing portion of claim 1. According to the invention, the connecting mechanism is designed as a telescoping mechanism.

According to an embodiment of the present invention, the telescoping mechanism can be a telescoping connecting rod.

In a still further embodiment, the telescoping mechanism is a connecting rod movably installed inside an elongated hole of the LCD monitor. This embodiment can be further improved by designing the connecting rod as a telescoping connecting rod.

These as well as other features of the present invention will become more apparent upon reference to the drawings therein:

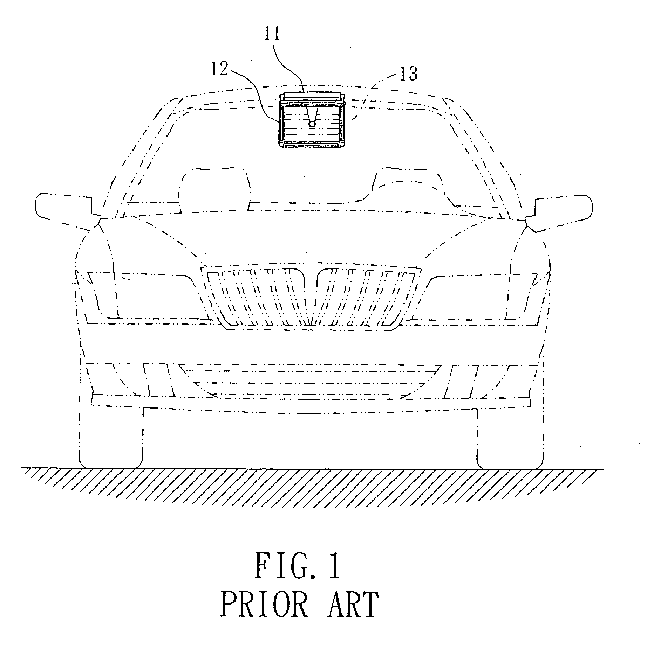

Figure 1 is a front view of a car with a liquid crystal display (LCD) car monitor installed at the front of the car ceiling, illustrating one conventional art.

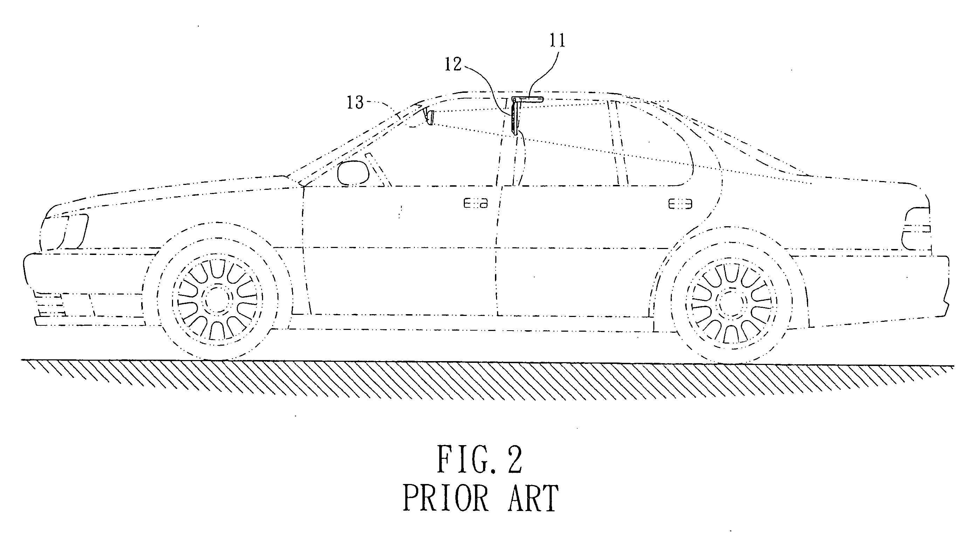

Figure 2 is a side view of a car with a LCD car monitor installed at the center of the car ceiling, illustrating another conventional art.
Figure 3 is a perspective view of a LCD car monitor frame structure without blocking a driver's rear vision of a first embodiment in accordance with the present invention.
Figure 4 is a side view of the LCD car monitor frame structure of the first embodiment, showing a condition wherein the LCD monitor is rotated from its stored position to a pre-determined position.
Figure 5 is a front view of the LCD car monitor frame structure of the first embodiment, showing a condition wherein the LCD monitor is at the pre-determined position.
Figure 6 is a front view of the LCD car monitor frame structure of the first embodiment, showing a condition wherein the LCD monitor is further lowered down.
Figure 7 is a front view of a car with the LCD car monitor frame structure of the first embodiment installed, showing an unobstructed space formed between the roof mount and the LCD monitor.
Figure 8 is a side view of the car with the LCD car monitor frame structure of the first embodiment installed, showing a condition wherein the unobstructed space accords with the view angle of the rearview mirror of the car, and whereby the line of sight of a driver will not be blocked while rear seat passengers watch the LCD monitor.
Figure 9 is a front view of a LCD car monitor frame structure without blocking a driver's rear vision of a second embodiment in accordance with the present invention, showing a condition wherein the LCD monitor is at the pre-determined position.
Figure 10 is a front view of the LCD car monitor frame structure of the second embodiment, showing a condition wherein the LCD monitor is further lowered down.
Figure 11 is a perspective view of a LCD car monitor frame structure without blocking a driver's rear vision of a third embodiment in accordance with the present invention.
Figure 12 is a side view of the LCD car monitor frame structure of the third embodiment, showing a condition wherein the LCD monitor is rotated from its stored position to a pre-determined position.
Figure 13 is a front view of the LCD car monitor frame structure of the third embodiment, showing a condition wherein the LCD monitor is at the pre-determined position.
Figure 14 is a front view of the LCD car monitor frame structure of the third embodiment, showing a condition wherein the LCD monitor is further lowered down.
Figure 15 is a front view of a LCD car monitor frame structure without blocking a driver's rear vision of a fourth embodiment in accordance with the present invention.

Reference will now be made in detail to the preferred embodiments of the present invention, examples of which are illustrated in the accompanying drawings. Wherever possible, the same reference numbers are used in the drawings and the description to refer to the same or like parts.

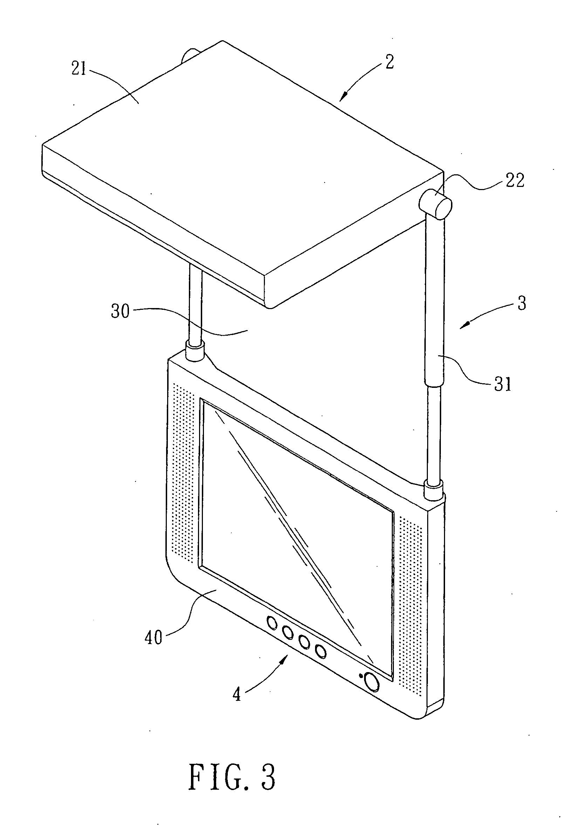

Referring to figure 3 through figure 8, a liquid crystal display (LCD) car monitor frame structure without blocking a driver's rear vision of a first embodiment in accordance with the present invention comprises a roof mount 2, a LCD monitor 4, and two connecting members 3.

The roof mount 2 includes a flat plane 21 that is secured to a car ceiling. At each side of the roof mount 2, a pivot axle 22, which is connected to one end of a connecting member 3, is installed to enable the connecting members 3 to rotate around it.

The LCD monitor 4 comprises a monitor housing 40. The top of the monitor housing 40 is secured to the other end of the connecting members 3. The LCD monitor 4 is normally stored on the car ceiling ahead of the roof mount 2.

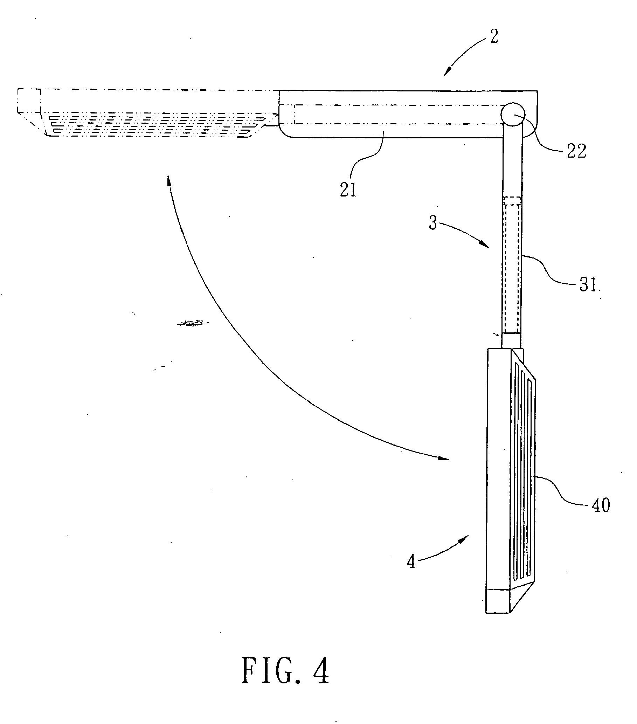

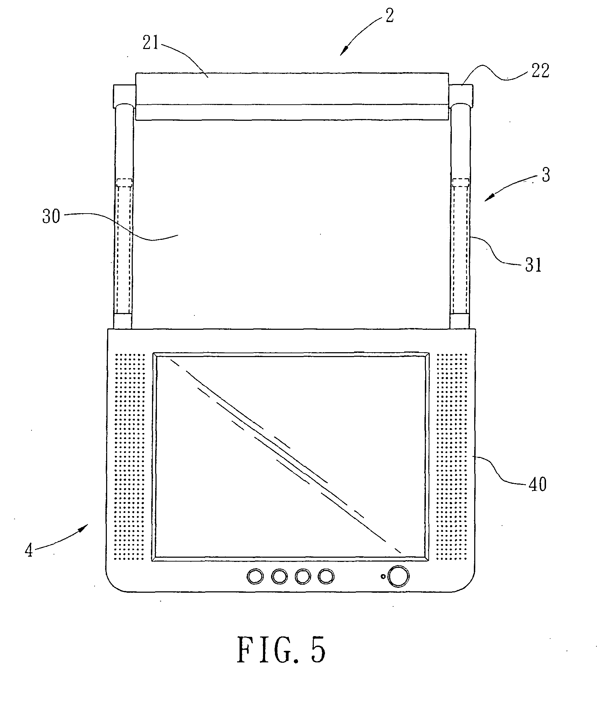

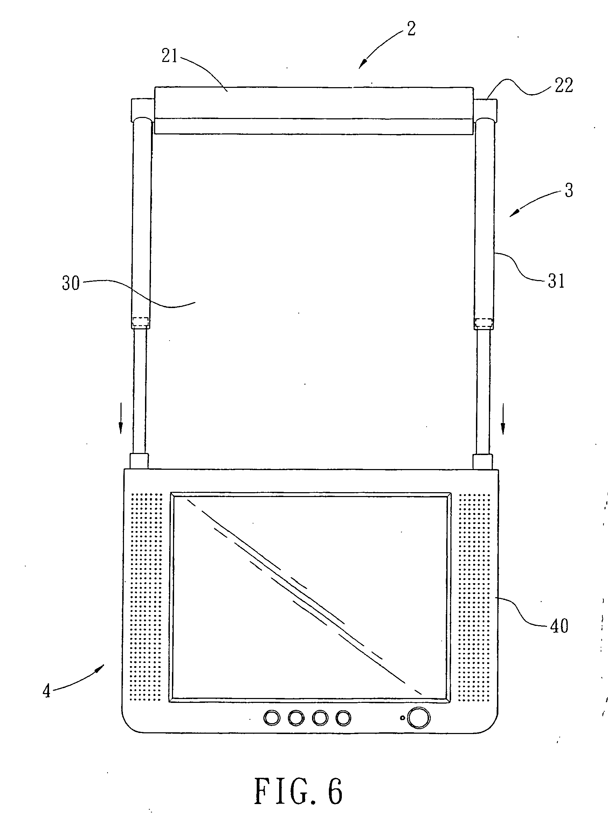

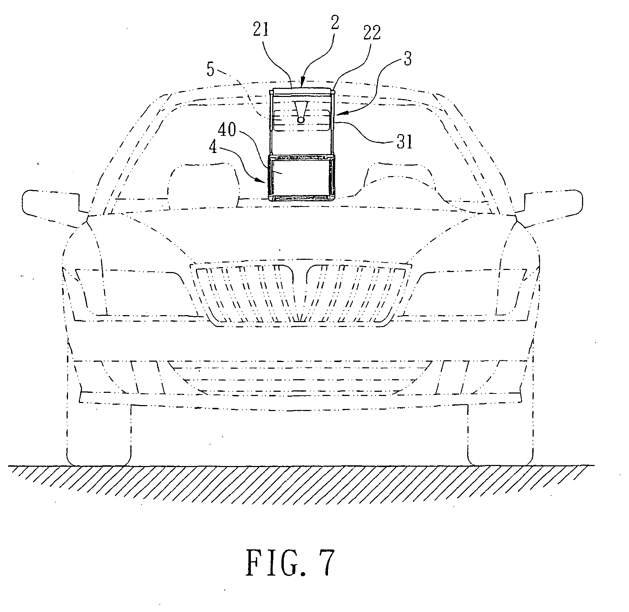

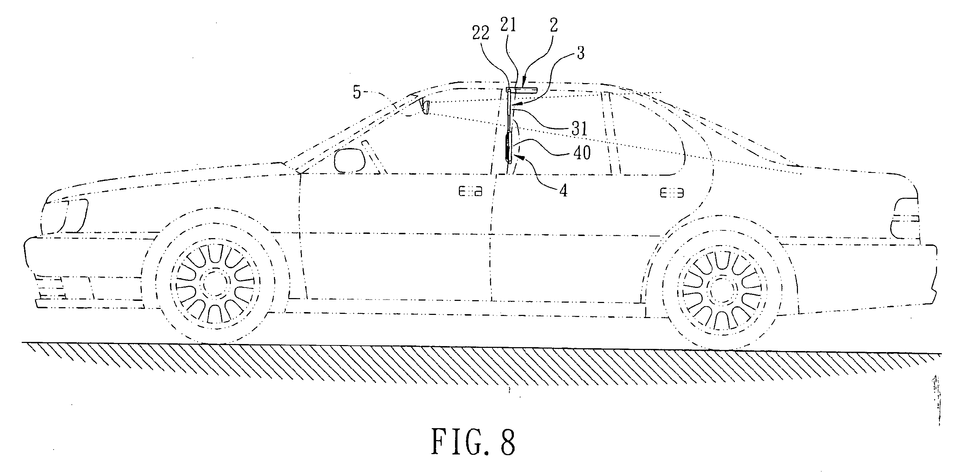

The connecting members 3 connect the LCD car monitor 4 to the roof mount 2. The full length of the connecting members 3 is longer than the length of the roof mount 2. The LCD monitor 4 is thereby able to be stored on the car ceiling ahead of the roof mount 2. The connecting members 3 are telescoping connecting rods 31. As stated above, one end of the connecting rods 31 connects to the pivot axle 22 of the roof mount 2. The other end of the connecting rods 31 connects to the LCD car monitor 4. Consequently, the LCD monitor 4 can be rotated automatically or manually out from its stored position to a pre-determined position, as shown in figure 4 and figure 5. The telescoping connecting rods 31 enable the LCD monitor 4 to further lower its position, as shown in figure 6. An unobstructed space 30 is, thereby, formed between the roof mount 2 and the LCD monitor 4, as shown in figure 7. The length of the unobstructed space 30 is equal to the length of the connecting rods 31. Because the unobstructed space 30 accords with the view angle of the rearview mirror of a car, the line of sight of a driver will not be blocked while rear seat passengers watch the LCD monitor 4, as shown in figure 8.

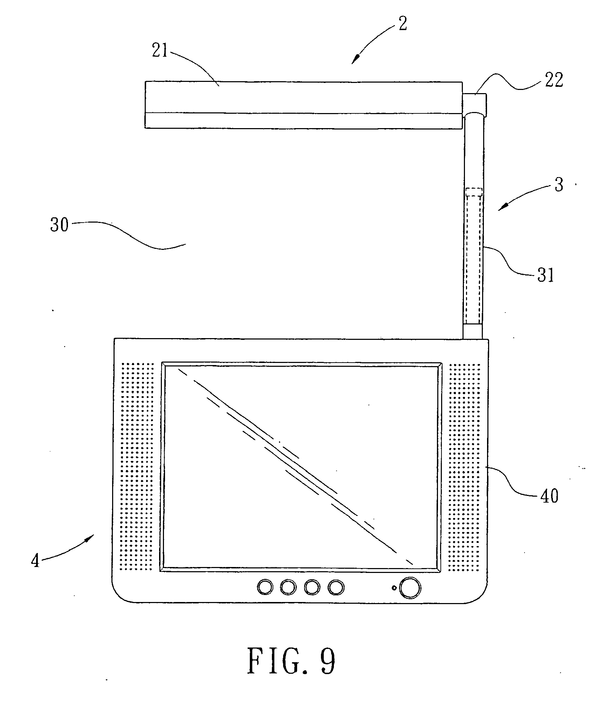

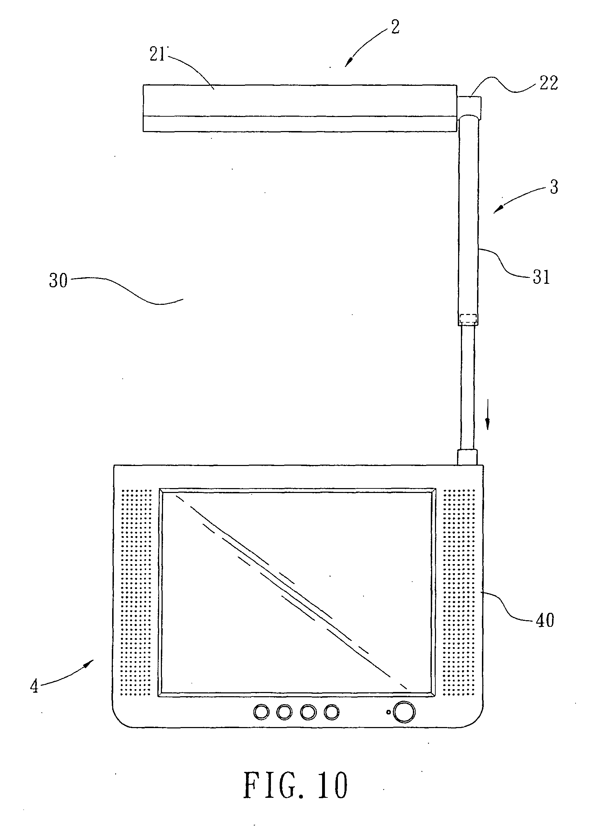

Referring to figure 9 and figure 10, a LCD car monitor frame structure without blocking a driver's rear vision of a second embodiment in accordance with the present invention is shown. The LCD car monitor frame structure comprises a roof mount 2, a LCD monitor 4, and a single connecting member 3. The single connecting member 3 is a telescoping connecting rod 31. The single connecting member 3 can be secured either at the middle or at one side of the roof mount 2.

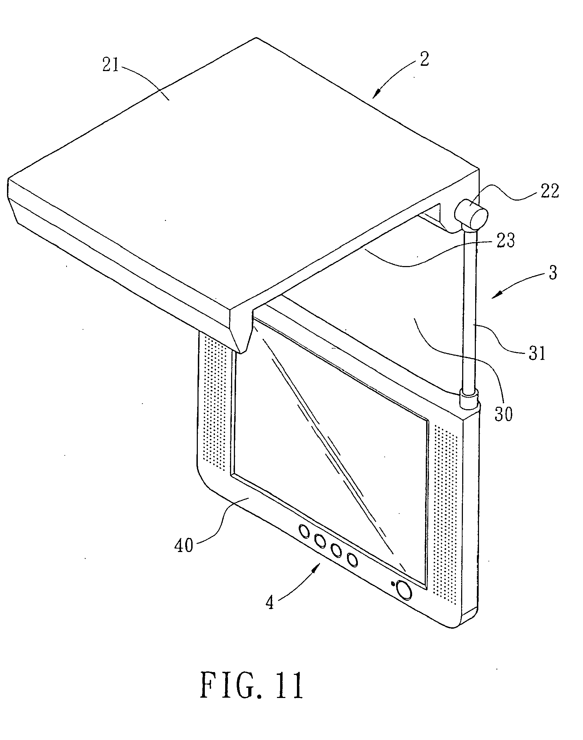

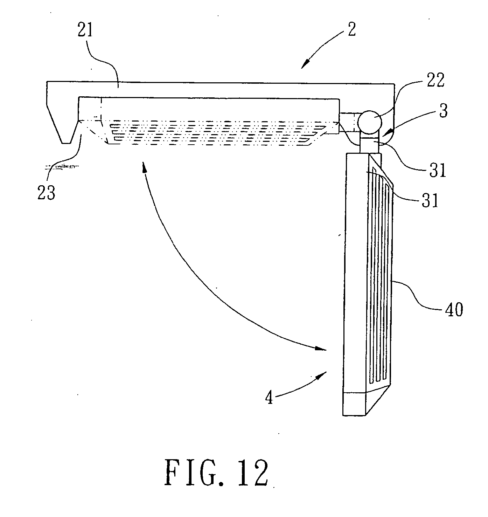

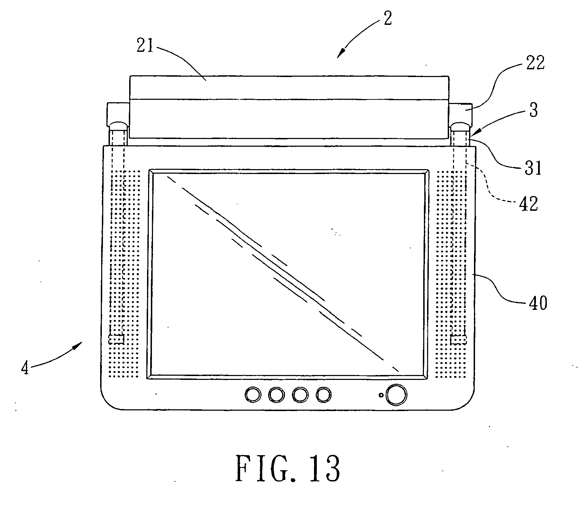

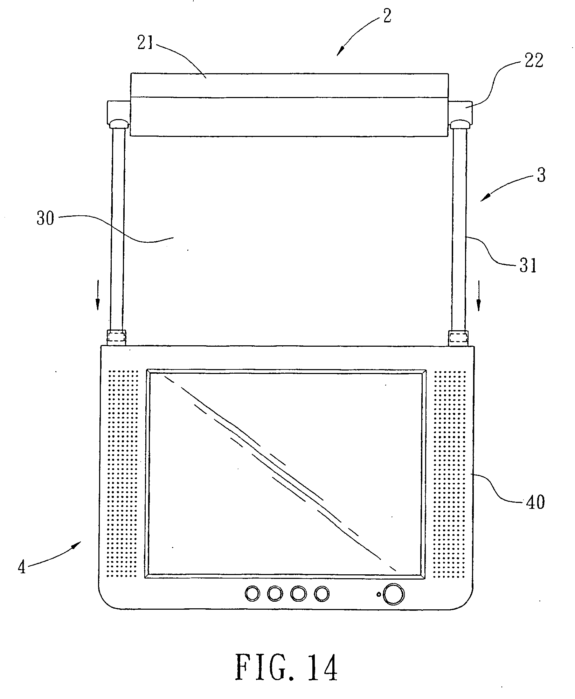

Referring to figure 11 through figure 14, a LCD car monitor frame structure without blocking a driver's rear vision of a third embodiment in accordance with the present invention is shown. The LCD car monitor frame structure comprises a roof mount 2 with a receptive space 23, a LCD monitor 4 with at least one elongate hole 42, and two connecting members 3. The roof mount 2 includes a flat plane 21, a pivot axle 22, and a receptive space 23. The flat plane 21 is secured to the car ceiling. The pivot axle 22 is connected to one end of the connecting members 3. The receptive space 23 is able to store the LCD monitor 4. The other end of each connecting member 3 is movably installed inside an elongate hole 42 of the LCD monitor 4. The connecting members 3 are either fixed length connecting rods 31 or telescoping connecting rods. The LCD monitor 4 can be rotated automatically or manually out from its stored position to a pre-determined position, as shown in figure 12 and figure 13. Because the connecting rods 31 are movably installed inside the elongate holes 42 of the LCD monitor 4, the LCD monitor 4 is able to lower its position, as shown in figure 14. An unobstructed space 30 is, thereby, formed between the roof mount 2 and the LCD monitor 4, as shown in figure 14. The length of the unobstructed space 30 is equal to the length of the connecting rods 31. Because the unobstructed space 30 accords with the view angle of the rearview mirror of a car, the line of sight of a driver will not be blocked while rear seat passengers watch the LCD monitor 4.

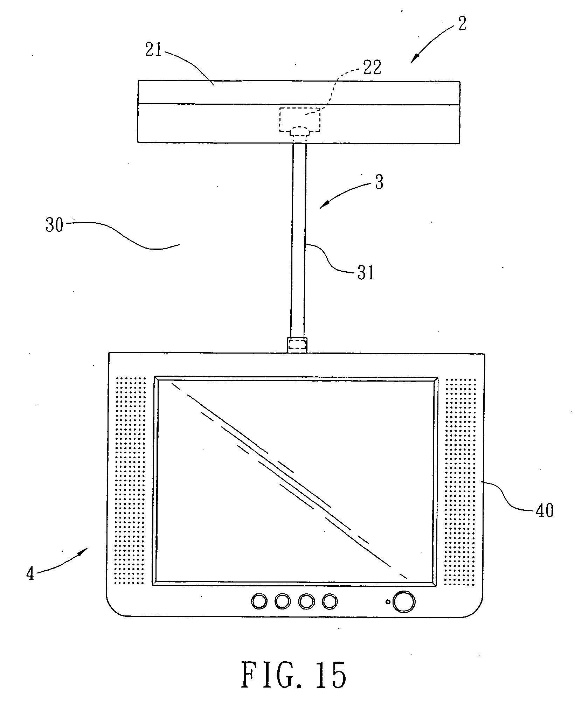

Referring to figure 15, a LCD car monitor frame structure without blocking a driver's rear vision of a fourth embodiment in accordance with the present invention is shown. The LCD car monitor frame structure comprises a roof mount 2 with a receptive space 23, a LCD monitor 4 with a single elongate hole 42, and a single connecting member 3. The single connecting member 3 can be secured either at the middle or at one side of the roof mount 2.

## Claims

1. A liquid crystal display (LCD) car monitor frame structure, comprising:
- a roof mount (2) that is fixed to a car ceiling;
- at least one connecting mechanism (3) with one end pivotally connected to the roof mount (2), and
- an LCD monitor (4) secured to the other end of the connecting mechanism (3), wherein a space is provided between the roof mount (2) and the LCD monitor (4) when the LCD monitor (4) is rotated out to a pre-determined position for utilization by passengers,
**characterized in that**
the connecting mechanism (3) is a telescoping mechanism.

2. The LCD car monitor frame structure of claim 1
**characterized in that**
the telescoping mechanism (3) is a telescoping connecting rod (31).

3. The LCD car monitor frame structure of claim 1
**characterized in that**
the telescoping mechanism (3) is a connecting rod movably installed inside an elongated hole (42) of the LCD monitor (4).

4. The LCD car monitor frame structure of claim 3
**characterized in that**
the connecting rod is a telescoping connecting rod.

5. The LCD car monitor frame structure of one of the claims 1 to
**characterized in that**
the telescoping mechanism (3) is secured either at the middle or at one side of the roof mount (2).

6. The LCD car monitor frame structure of one of the claims 1 to 5
**characterized in that**
the roof mount (2) has a pivot axle that is able to pivotally connect to one end of the telescoping mechanism (3).

7. The LCD car monitor frame structure of one of the claims 1 to 6
**characterized in that**
it comprises two telescoping mechanisms (3).

## Patentansprüche

1. Flüssigkristallanzeige-(LCD)-Fahrzeugmonitor-Rahmenstruktur, die umfasst:
- eine Dachhalterung (2), die an der Innenseite eines Fahrzeugdachs befestigt ist;
- wenigstens einen Verbindungsmechanismus (3), wovon ein Ende an der Dachhalterung (2) angelenkt ist, und
- einen LCD-Monitor (4), der am anderen Ende des Verbindungsmechanismus (3) befestigt ist, wobei zwischen der Dachhalterung (2) und dem LCD-Monitor (4) ein Zwischenraum vorgesehen ist, wenn der LCD-Monitor (4) in eine vorgegebene Position für die Verwendung durch Fahrgäste nach außen gedreht wird,
**dadurch gekennzeichnet, dass**
der Verbindungsmechanismus (3) ein Teleskopmechanismus ist.

2. LCD-Fahrzeugmonitor-Rahmenstruktur nach Anspruch 1,
**dadurch gekennzeichnet, dass**
der Teleskopmechanismus (3) ein Teleskopverbindungsstab (31) ist.

3. LCD-Fahrzeugmonitor-Rahmenstruktur nach Anspruch 1,
**dadurch gekennzeichnet, dass**
der Teleskopmechanismus (3) ein Verbindungsstab ist, der in einem lang gestreckten Loch (42) des LCD-Monitors (4) beweglich installiert ist.

4. LCD-Fahrzeugmonitor-Rahmenstruktur nach Anspruch 3,
**dadurch gekennzeichnet, dass**
der Verbindungsstab ein Teleskopverbindungsstab ist.

5. LCD-Fahrzeugmonitor-Rahmenstruktur nach einem der Ansprüche 1 bis 4,
**dadurch gekennzeichnet, dass**
der Teleskopmechanismus (3) entweder in der Mitte oder an einer Seite der Dachhalterung (2) befestigt ist.

6. LCD-Fahrzeugmonitor-Rahmenstruktur nach einem der Ansprüche 1 bis 5,
**dadurch gekennzeichnet, dass**
die Dachhalterung (2) eine Schwenkachse besitzt, die an einem Ende des Teleskopmechanismus (3) angelenkt sein kann.

7. LCD-Fahrzeugmonitor-Rahmenstruktur nach einem der Ansprüche 1 bis 6,
**dadurch gekennzeichnet, dass**
sie zwei Teleskopmechanismen (3) umfasst.

## Revendications

1. Structure de cadre d'un écran à cristaux liquides (LCD) pour voiture, comprenant :
- un support de toit (2) qui est fixé au plafond de la voiture ;
- au moins un mécanisme de raccordement (3) avec une extrémité reliée de manière pivotante au support de toit (2), et
- un écran LCD (4) fixé à l'autre extrémité du mécanisme de raccordement (3), dans lequel un espace est prévu entre le support de toit (2) et l'écran LCD (4) lorsque l'écran LCD (4) est tourné vers une position prédéterminée pour être utilisé par des passagers,
**caractérisé en ce que** le mécanisme de raccordement (3) est un mécanisme télescopique.

2. Structure de cadre d'un écran LCD pour voiture selon la revendication 1, **caractérisé en ce que** le mécanisme télescopique (3) est une tige de raccordement télescopique.

3. Structure de cadre d'un écran LCD pour voiture selon la revendication 1, **caractérisé en ce que** le mécanisme télescopique (3) est une tige de raccordement installée de manière mobile à l'intérieur d'un trou oblong (42) de l'écran LCD (4).

4. Structure de cadre d'un écran LCD pour voiture selon la revendication 3, **caractérisé en ce que** la tige de raccordement est une tige de raccordement télescopique.

5. Structure de cadre d'un écran LCD pour voiture selon l'une quelconque des revendications 1 à 4, **caractérisé en ce que** le mécanisme télescopique (3) est fixé au milieu ou sur un côté du support de toit (2).

6. Structure de cadre d'un écran LCD pour voiture selon l'une quelconque des revendications 1 à 5, **caractérisé en ce que** le support de toit (2) présente un axe de pivot qui peut se raccorder de manière pivotante à une extrémité du mécanisme télescopique (3).

7. Structure de cadre d'un écran LCD pour voiture selon l'une quelconque des revendications 1 à 6, **caractérisé en ce qu'**il comprend deux mécanismes télescopiques (3).
